Europäisches Patentamt

**European Patent Office**

Office européen des brevets

(11) Publication number : **0 481 127 B1**

(12) ## EUROPEAN PATENT SPECIFICATION

(45) Date of publication of patent specification :
02.03.94 Bulletin 94/09

(51) Int. Cl.⁵ : **G01D 3/02,** G01R 15/12

(21) Application number : **90202741.6**

(22) Date of filing : **15.10.90**

(54) **A digital and programmable measuring and control instrument, particularly for non-linear signals.**

(43) Date of publication of application :
22.04.92 Bulletin 92/17

(45) Publication of the grant of the patent :
02.03.94 Bulletin 94/09

(84) Designated Contracting States :
AT BE CH DE DK ES FR GB GR LI LU NL SE

(56) References cited :
EP-A- 0 114 536
EP-A- 0 186 635
US-A- 4 250 447
US-A- 4 794 383

(56) References cited :
IEEE TRANSACTIONS ON INSTRUMEN-
TATION AND MEASUREMENT, vol. 31, no. 4,
December 1982, New York, US, pages 249-254;
J.S. Ali et al: "Response Linearization of a
Diode Detector Type Radio Frequency Electric
Field Probe"
PATENT ABSTRACTS OF JAPAN, vol. 6, no.
162 (P-137)(1040), 25 August 1982, & JP-A-57
80516
JOURNAL OF PHYSICS E. SCIENTIFIC IN-
STRUMENTS, vol. 11, no. 6, June 1978, ISH-
ING, Bristol, GB, pages 576-580; S.R. Ashley et
al: "An inexpensive digital lineariser for non-
linear transducers"

(73) Proprietor : **Bruttini, Roberto**
**Via Gottardo 103**
**I-10155 Turin (IT)**

(72) Inventor : **Bruttini, Roberto**
**Via Gottardo 103**
**I-10155 Turin (IT)**

(74) Representative : **Robba, Eugenio et al**
**Studio "INTERPATENT" via Caboto 35**
**I-10129 Turin (IT)**

Jouve, 18, rue Saint-Denis, 75001 PARIS

## Description

The present invention concerns a measuring and control instrument of the digital type and programmable, adapted to display numerical values coming from analog to digital conversion of electric signals in form of numeric data.

Electronic metering devices or apparatuses, both analog and digital, provide a more or less accurate measurement of a selected quantity (e.g. Volt, Ampere, etc.) relating to an electric signal. Therefore, the use of such electronic metering devices for measuring physical quantities of a kind different from the electric one (e.g. a pressure) requires the interposing of a suitable transducer adapted to convert into an electric signal a given physical quantity.

US-A-4 25Ø 447 describes a digital multimeter that multiplies a signal by some fixed values and sends it to a display, but does not provide as output a signal that can be either an analog one or can command other devices placed downstream of the multimeter.

In "IEEE Transactions on Instrumentation and Measurement", Vol. IM-31 (1982), No. 4, p. 249-254, there is described a response linearization of a diode detector type radio frequency electric field probe, that provides as input signal a fourth-order polynomial approximation of the input curve; the solution is not very accurate and can be better used in the radio frequency field.

In "Journal Physics E", Vol. 11, No. 6 (1978), p. 576-58Ø, there is described a digital lineariser for nonlinear transducers that uses a computer with a software program that converts the input signal into the desired output: this solution is too costly to be employed in the field of the invention.

EP-A-Ø 186 635 discloses a method of measuring impedances using one or more references with which the input impedance value is compared through an EPROM.

EP-A-Ø 114 536 discloses a multi-probe measuring instrument, where the various inputs are selected through a signal to be sent to a microprocessor with a different signal level.

It is evident from the above that when the electric signal is a non-linear function of the physical quantity under consideration, the information supplied by such instruments is not easy to be interpreted, unless a proper conversion is carried out by means of known tables.

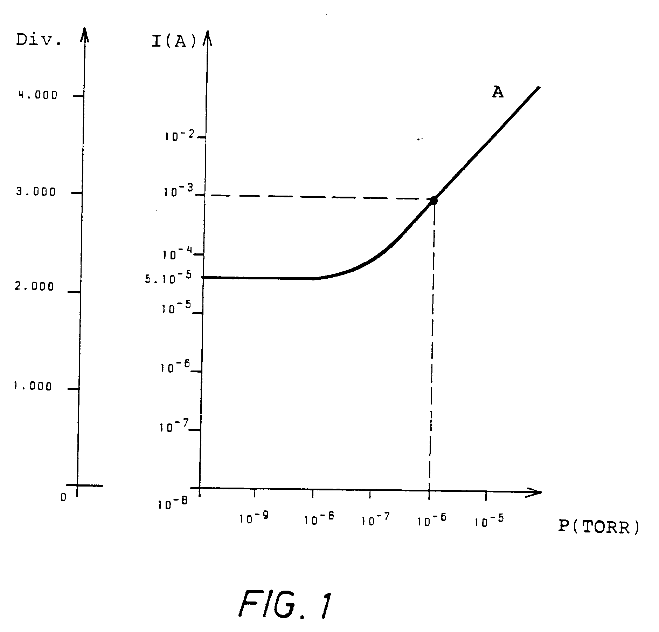

For a better understanding of the above Fig. 1 shows, as an example, the characteristic curve of the electric signal generated by a transduction device as a function of the residual inner pressure within a housing, e.g. a ion pump used as a vacuum gage or vacuometer, representing the quantity to be measured. As it is easily noted, the current values vary in a non-linear manner with respect to the pressure and the knowledge of such values is an indirect measurement which is of little use for an operator needing as a matter of fact a direct display of the pressure value.

Anyhow, while in an analog instrument it is possible to overcome such drawback by means of suitable dials printed with non-linear scales and having scale graduations directly reading the values of the quantity being considered instead of that of the electric signal actually measured by the instrument, this is not possible for instruments of digital type.

The present invention aims to provide a programmable digital measuring instrument wherein the level of the input electric signal can be displayed by means of digit, letters or both, programmable as desired, and therefore is capable to be programmed in such a way as to display data that varies in a linear manner even when the input signal varies in a non-linear manner with respect to the quantity to be measured.

A further object of the invention is that of providing a digital and programmable measuring instrument able to store several series of data corresponding to different scales for a same input signal so as to render the use of the instrument more extended and flexible.

The above and other objects and advantages, as will become clear in the following, are achieved by a digital and programmable measuring and control instrument as set out in claim 1. Further embodiments are set out in the dependant claims.

A preferred embodiment of the invention will now be disclosed in an illustrative and non limiting example and with reference to the attached drawings, in which:

Fig. 1 illustrates a curve "A" representing a typical current vs pressure function within a ion pump used as a vacuum gage, wherein the current values are related to an adjacent scale of codified numbers in programmable memory devices according to the present invention;

Fig. 2 is a block diagram of a digital and programmable measuring and control instrument according to the invention.

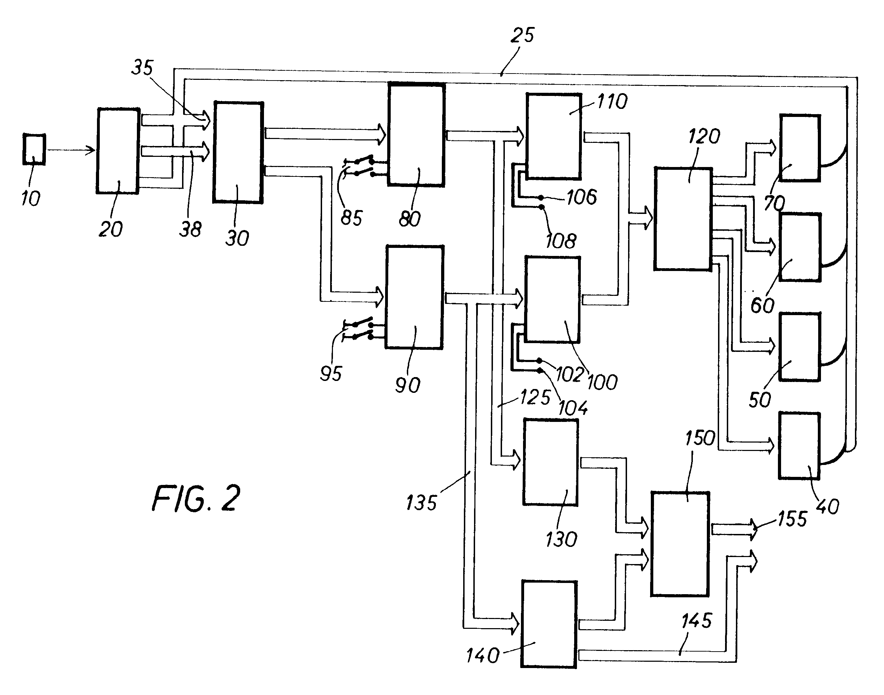

With reference to the block diagram shown in Fig. 2, an analog signal, even a non-linear signal, from a signal generator 10 of any type, such as the vacuum gage mentioned with reference to Fig. 1, is input to an analog-digital converter 20 that converts, through the dual slope method which is well known to the skilled of the art, the input voltage into a series of pulses counted by counters within the converter itself and transmitted

to four outputs $Q_0$, ... $Q_3$.

Moreover, the analog-digital converter 20 divides the input signal into about 4,000 parts. For example, referring to a signal ranging between a minimum value of -10 mV and a maximum value of +10 mV, each subdivision is of 0.005 mV, and to each one of them it is possible to associate a different data that can be later displayed on a display through processing by means of electronic components described hereinafter.

Such subdivision allows for a displaying, on displays 40, 50, 60 and 70 shown in Fig. 2, linearly varying data even when the input signal refers to a signal that can be represented by a a non-linear curve, such as the one shown as "A" in Fig. 1.

An additional function provided by the analog-digital converter 20 is that of sequentially activating the cathodes of displays 40, 50, 60, 70, corresponding in this order to the thousands, hundreds, tens and units digits, by supplying a positive voltage pulse.

Besides being transmitted to the above mentioned cathodes of displays 40 to 70 along line 25 shown in Fig. 2, this positive sequential pulse is also delivered to the clock inputs of a plurality of a buffer (temporary) memories 30 along a line 35.

A preferred embodiment of the present invention provides four of such memories 30, one for the thousands digits, one for the hundreds digits, one for the tens digits and one for the units digits, the memories being D-LATCH integrated circuits and therefore adapted to be enabled or disabled by a clock signal being at a high level or at a low level, respectively, with reference to a constant positive voltage signal.

The following Table 1 illustrates such situation in a more precise manner:

TABLE   1

| CLOCK | POLARITY | OUTPUT |
|-------|----------|--------|
|       |          | Q      |
| 1     | 1        | supplies data |
| 0     | 1        | blocked |

The analog-digital converter 20 sequentially supplies output information concerning the thousands, then the hundreds, then the tens and finally the units digits.

Such information is codified by means of a four bit binary code $Q_0....Q_3$, and then transmitted to the said buffer memories 30.

In accordance with the sequence pulses from the analog-digital converter, each memory 30 routes the data from this latter to a pair of programmable and erasable read only memories, known in the art as EPROM memories, that have been programmed in advance as desired.

Such memories have a number of internal addresses large enough to allow the storage of four series of data comprising four different scales (e.g. in mVolt, in mm Hg, in Pa, in millibar or other auxiliary scales).

With the aid of a computer, in the programmable memories 80 and 90 it is possible to store given values in accordance with a known law, said values being output by the programmable memory devices 80 and 90 when the input receives the memory address of the location containing such value.

In order to better understand what above discussed, reference is to be made to Fig. 1 wherein to the level of curve "A" codified as 3,000, the memory devices 80 and 90 associate the number E-6 (Torr.) corresponding to the value $1.10^{-6}$ Torr to which is related the measured current.

The programmable EPROM memory 80 is used to display the units and the tens, whereas the memory 90 is used to display the hundreds and the thousands.

The selection of one of the four scales takes place by means of four dip switches indicated at 85 and 95. As a function of their closed or open positions, such switches apply to the input of the programmable memories 80 and 90 one of the four possible binary configurations, each of which is associated to a different scale.

The output signals from the programmed memories 80, 90 are now linearized and then applied (as units and tens digits) to the inputs of a second electronic switching device 110.

The above mentioned electronic switching devices are made up by integrated circuits known as three-state buffers.

The transmission of signals through such switches 100 and 110 is enabled or blocked by sequential pulses from the analog-digital converter that firstly allows the passage of the most significant values constituted by the thousands digits, and then those of the hundreds and tens, to end with the least significant value constituted by the units, and thereafter to resume the cycle with this sequence.

Such sequential pulses are indicated, in the above order, by the references 102, 104, 106, 108 in Fig. 2.

The output signals from the electronic switches 100 and 110 are led to an electronic device 120 comprising a programmable decoder adapted to display the numerical data from said switches and to be programmed in such a manner as to supply also alphabet letters in correspondence with the above numeric data.

The digital signals coming from the programmable memory devices 80 and 90 and transmitted to the switching means 100 and 110 are also led to a further pair of programmable memories (EPROM) 130 and 140 that, thanks to a proper programming, delivers digital control signals along a line indicated at 145 in Fig. 2 to subsequent actuating devices (not shown), and other digital signals to a 12 bit input digital-analog converter 150 whose output analog signal indicated at 155 in Fig. 2 is used to control or command additional devices that are not shown.

Moreover, the four most significant bits at the output of programmable memory 140, if so requested, are used as command signals for alarm devices actuated by means of not shown relays.

Such command signals are determined through the binary value selected by switches 85 and 95 and the level of the bit representing the thousands.

From the description of the structure and the working of the present measuring and control instrument, and with reference to Fig. 1, it is evident that by means of a proper programmation of the programmable memory devices 80 and 90 it is possible to employ voltage transducers different from the one above illustrated, such different transducers supplying signals that vary in a different way and that can anyhow be displayed and controlled according to the disclosed modalities. Therefore the present instrument has an extended number of applications.

Of course a preferred embodiment of the digital and programmable measuring and control instrument has been disclosed, particularly for non-linear signals, but the present invention is not limited to the above illustrated embodiment, extending to any other equivalent circuital embodiment within the scope of the inventive idea as defined by the attached claims.

## Claims

1. A digital and programmable measuring and control instrument, particularly for non-linear signals, comprising:
   - conversion means (2∅) for converting analog signals coming from generating means (1∅) into digital signals, said signals being delivered to a circuit comprising a plurality of buffer means (3∅), each storing values referred to units, tens, hundreds and thousands, respectively; said conversion means (2∅) further generating sequential control pulses for said buffer memories and for display components (4∅-7∅);
   - first programmable storing means (8∅, 9∅) adapted to provide predetermined values for each converted signal;
   - switching means (1∅∅, 11∅) for the signals coming from said first programmable storing means (8∅, 9∅);
   - second programmable storing means (13∅, 14∅) adapted to provide predetermined values for each value of the signals coming from said first storing means (8∅, 9∅);
   - programmable decoding means (12∅), connected downstream of said switching means (1∅∅, 11∅);
   characterized in that:
       said switching means (1∅∅, 11∅) are sequentially activated by said control pulses generated by said conversion means (2∅), said switching means (1∅∅, 11∅) thereby generating sequential pulses (1∅2, 1∅4, 1∅6, 1∅8) and sequentially sending them to said programmable decoding means (12∅) to be decoded, said programmable decoding means (12∅) transmitting the decoded signals to display means (4∅, 5∅, 6∅, 7∅);
       said switching means (1∅∅, 11∅) also send said signals coming from said first storing means (8∅, 9∅) to said second programmable storing means (13∅, 14∅), said second programmable storing means (13∅, 14∅) transmitting digital control signals to subsequent actuating devices and other digital signals to additional conversion means (15∅), said additional conversion means (15∅) converting said digital signals into analog signals to control additional devices.

2. A digital and programmable measuring and control instrument as claimed in claim 1, characterized in that said conversion means (20) of analog signals comprises an analog-digital converter of the dual slope type, adapted to divide the input signals into 4,000 parts.

3. A digital and programmable measuring and control instrument as claimed in claims 1 and 2, characterized in that the sequential control pulses are generated by said analog-digital converter (20).

4. A digital and programmable measuring and control instrument as claimed in claim 1, characterized in that said buffer memories (30) comprise D-LATCH integrated circuits.

5. A digital and programmable measuring and control instrument as claimed in claim 1, characterized in that said first programmable storing means (80, 90) comprises programmable and erasable read only memories i.e. EPROM.

6. A digital and programmable measuring and control instrument as claimed in claim 1, characterized in that said switching means (100, 110) comprises three-state buffer circuits.

7. A digital and programmable measuring and control instrument as claimed in claim 1, characterized in that said second programmable storing means (130, 140) comprises programmable and erasable read only memories i.e. EPROM.

8. A digital and programmable measuring and control instrument as claimed in claim 1, characterized in that said programmable decoding means (120) comprises integrated circuits adapted to supply decoded signals defined by letters and numbers.

9. A digital and programmable measuring and control instrument as claimed in claim 1, characterized in that said digital-to-analog conversion means (150) comprises a 12 bit input digital-analog converter.

**Patentansprüche**

1. Digitales und programmierbares Meß- und Regelinstrument, insbesondere für nichtlineare Signale, welches folgendes aufweist:
   - eine Umsetzeinrichtung (20) zum Umsetzen der von einer Signalerzeugungseinrichtung (10) kommenden Signale in digitale Signale, welche einer Schaltung mit einer Vielzahl von Zwischenspeichereinrichtungen (30) zugeführt werden, wobei in jeder von diesen Werte abgespeichert sind, die sich jeweils auf Einer, Zehner, Hunderter und Tausender beziehen; und wobei die Umsetzeinrichtung (20) des weiteren sequentielle Steuerimpulse für die Zwischenspeicher und für Anzeigebausteine (40 - 70) erzeugt;
   - eine erste programmierbare Speichereinrichtung (80, 90), welche so ausgelegt ist, daß sie für jedes umgesetzte Signal vorgegebene Werte liefert;
   - eine Schalteinrichtung (100, 110) für die von der ersten programmierbaren Speichereinrichtung (80, 90) kommenden Signale;
   - eine zweite programmierbare Speichereinrichtung (130, 140), die so ausgelegt ist, daß sie für jeden Wert der aus der ersten programmierbaren Speichereinrichtung (80, 90) kommenden Signale vorgegebene Werte liefert;
   - eine programmierbare Dekodiereinrichtung (120), die der Schalteinrichtung (100, 110) nachgeschaltet ist;

   **dadurch gekennzeichnet**, daß:
      die Schalteinrichtungen (100, 110) nacheinander von den von der Umsetzeinrichtung (20) erzeugten Steuerimpulsen angesprochen werden und dabei sequentielle Impulse (102, 104, 106, 108) erzeugen und diese nacheinander an die programmierbare Dekodiereinrichtung (120) zur Dekodierung übermitteln, wobei die programmierbare Dekodiereinrichtung (120) die dekodierten Signale an Anzeigeeinrichtungen (40, 50, 60, 70) übermittelt;
      die Schalteinrichtung (100, 110) auch die von der ersten Speichereinrichtung (80, 90) kommenden Signale an die zweite programmierbare Speichereinrichtung (130, 140) übermittelt, welche digitale Steuersignale an nachfolgende Stelleinrichtungen und andere digitale Signale an eine zusätzliche Umsetzeinrichtungen (150) übermittelt, wobei die zusätzliche Umsetzeinrichtung (150) die digitalen Signale in analoge Signale zur Ansteuerung der zusätzlicher Bauteile umsetzt.

2. Digitales und programmierbares Meß- und Regelinstrument nach Anspruch 1, dadurch gekennzeichnet, daß die Einrichtung (20) zum Umsetzen analoger Signale einen Analog-Digital-Wandler in Form eines Zweiflankenwandlers aufweist, der so ausgelegt ist, daß er die Eingangssignale in 4.000 Teile aufteilen kann.

3. Digitales und programmierbares Meß- und Regelinstrument nach den Anspruchen 1 und 2, dadurch gekennzeichnet, daß die sequentiellen Steuerimpulse von dem Analog-Digital-Wandler (20) erzeugt werden.

4. Digitales und programmierbares Meß- und Regelinstrument nach Anspruch 1, dadurch gekennzeichnet, daß die Zwischenspeicher (30) integrierte D-Signal-Speicherschaltungen aufweisen.

5. Digitales und programmierbares Meß- und Regelinstrument nach Anspruch 1, dadurch gekennzeichnet, daß die erste programmierbare Speichereinrichtung (80, 90) programmierbare und löschbare Festspeicher, d.h. EPROM-Speicher, aufweist.

6. Digitales und programmierbares Meß- und Regelinstrument nach Anspruch 1, dadurch gekennzeichnet, daß die Schalteinrichtung (100, 110) ternäre Zwischenspeicherschaltungen aufweist.

7. Digitales und programmierbares Meß- und Regelinstrument nach Anspruch 1, dadurch gekennzeichnet, daß die zweite programmierbare Speichereinrichtung (130, 140) programmierbare und löschbare Festspeicher, d.h. EPROM-Speicher, aufweist.

8. Digitales und programmierbares Meß- und Regelinstrument nach Anspruch 1, dadurch gekennzeichnet, daß die programmierbare Dekodiereinrichtung (120) integrierte Schaltungen aufweist, die so ausgelegt sind, daß sie dekodierte Signale liefert, die durch Buchstaben und Zahlen definiert sind.

9. Digitales und programmierbares Meß- und Regelinstrument nach Anspruch 1, dadurch gekennzeichnet, daß die Digital-Analog-Wandler-Einrichtung (150) einen Digital-Analog-Wandler mit 12-Bit-Eingang aufweist.

## Revendications

1. Un instrument de mesure et de contrôle numérique programmable, en particulier pour des signaux non-linéaires, comprenant:
   - un moyen de conversion (20), destiné à convertir les signaux analogiques provenant d'un moyen générateur (10) en signaux numériques, lesdits signaux étant fournis à un circuit comprenant une pluralité de moyens tampons (30), chacun d'eux mémorisant des valeurs se rapportant respectivement aux unités, dizaines, centaines et milliers, ledit moyen de conversion (20) générant, en outre, des impulsions de contrôle séquentielles pour lesdites mémoires-tampons et pour les éléments d'affichage (40 à 70),
   - un premier moyen de mémorisation programmable (80, 90) adapté pour fournir des valeurs prédéterminées pour chaque signal converti,
   - des moyens de commutation (100, 110) pour les signaux provenant dudit premier moyen de mémorisation programmable (80, 90),
   - un second moyen de mémorisation programmable (130, 140) adapté pour fournir des valeurs prédéterminées pour chaque valeur des signaux provenant dudit premier moyen de mémorisation programmable (80, 90),
   - un moyen de décodage programmable (120), connecté en aval desdits moyens de commutation (100, 110),
   caractérisé en ce que:
   lesdits moyens de commutation (100, 110) sont actionnés séquentiellement par lesdites impulsions de contrôle générées par ledit moyen de conversion (20), lesdits moyens de commutation (100, 110) générant ainsi des impulsions séquentielles (102, 104, 106, 108) et les envoyant séquentiellement audit moyen de décodage programmable (120) pour être décodées, ledit moyen de décodage programmable (120) transmettant les signaux décodés à de moyens d'affichage (40, 50, 60, 70),
   lesdits moyens de commutation (100. 110) envoient également lesdits signaux provenant dudit premier moyen de mémorisation (80, 90) audit second moyen de mémorisation programmable (130, 140), ledit second moyen de mémorisation programmable (130, 140) transmettant des signaux de contrôle numériques pour actionner ultérieurement des dispositifs et d'autres signaux numériques à un moyen de conversion supplémentaire (150), ledit moyen de conversion supplémentaire (150) convertissant lesdits signaux numériques en signaux analogiques pour contrôler des dispositifs supplémentaires.

2. Un instrument de mesure et de contrôle numérique programmable suivant la revendication 1, caractérisé en ce que ledit moyen de conversion (20) de signaux analogiques comprend un convertisseur analogique-numérique du type à double pente, adapté pour diviser les signaux d'entrée en 4.000 parties.

3. Un instrument de mesure et de contrôle numérique programmable suivant les revendications 1 et 2, caractérisé en ce que les impulsions de contrôle séquentielles sont générées par ledit convertisseur analogique-numérique (20).

4. Un instrument de mesure et de contrôle numérique programmable suivant la revendication 1, caractérisé en ce que lesdites mémoires-tampons (30) comprennent des circuits intégrés D-LATCH.

5. Un instrument de mesure et de contrôle numérique programmable suivant la revendication 1, caractérisé en ce que ledit premier moyen de mémorisation programmable (80, 90) comprend des mémoires de lecture uniquement, c'est-à-dire EPROM, programmables et effaçables.

6. Un instrument de mesure et de contrôle numérique programmable suivant la revendication 1, caractérisé en ce que lesdits moyens de commutation (100, 110) comprennent des circuits-tampons à trois états.

7. Un instrument de mesure et de contrôle numérique programmable suivant la revendication 1, caractérisé en ce que ledit second moyen de mémorisation programmable (130, 140) comprend des mémoires de lecture uniquement, c'est-à-dire EPROM, programmables et effaçables.

8. Un instrument de mesure et de contrôle numérique programmable suivant la revendication 1, caractérisé en ce que ledit moyen de décodage programmable (120) comprend des circuits intégrés adaptés pour fournir des signaux décodés définis par des lettres et des nombres.

9. Un instrument de mesure et de contrôle numérique programmable suivant la revendication 1, caractérisé en ce que ledit moyen de conversion numérique-analogique (150) comprend un convertisseur numérique-analogique d'entrées à 12 bits.

FIG. 1

FIG. 2